# EUROPÄISCHE PATENTSCHRIFT

(11) **EP 1 686 277 B1**
(45) Veröffentlichungstag und Bekanntmachung des Hinweises auf die Patenterteilung: **29.07.2009**
(21) Anmeldenummer: 05100531.2
(22) Anmeldetag: 27.01.2005
(51) Int. Cl.: F16D 21/06, F16D 25/10, F16D 13/68

(54) **Doppelkupplung mit gleichgrossen Lamellen**
Dual-clutch with same dimension disks
Embrayage double à disques de même dimension

(43) Veröffentlichungstag der Anmeldung: 02.08.2006
(73) Patentinhaber: Getrag Ford Transmissions GmbH, 50735 Köln (DE)
(72) Erfinder: Hegerath, Andreas, 50126, Bergheim (DE); Lauscher, Friedel, 52372, Kreuzau-Drove (DE); Isele, Patrick, 50735, Köln (DE)

(56) Entgegenhaltungen:
- EP-A- 1 195 537
- WO-A-20/04104439
- DE-U1- 9 114 528
- FR-A- 1 469 727

## Beschreibung

Die Erfindung betrifft eine Doppelkupplung für ein Getriebe mit einer ersten Getriebeeingangswelle und einer dazu koaxial angeordneten zweiten Getriebeeingangswelle.

Eine derartige Doppelkupplung ist aus der EP 1 195 537 bekannt. Die Doppelkupplung umfasst dabei eine erste und zweite Reibkupplung, die in axialer Richtung der Doppelkupplung nebeneinander angeordnet sind und jeweils Außenlamellen und Innenlamellen aufweisen. Die Außenlamellen und die Innenlamellen einer Reibkupplung lassen sich durch eine hydraulische Kolben-Zylinder-Einheit zusammendrücken, so dass aufgrund der Reibung zwischen Außenlamellen und Innenlamellen ein Drehmoment übertragen wird.

Die Doppelkupplung aus der EP 1 195 537 umfasst des weiteren ein Kupplungsgehäuse, das beispielsweise von einem Verbrennungsmotor in einem Kraftfahrzeug angetrieben werden kann. Das Kupplungsgehäuse ist drehfest mit den Innenlamellen der ersten und zweiten Reibkupplung verbunden. Die Innenlamellen der ersten Reibkupplung unterscheiden sich nicht von den Innenlamellen der zweiten Kupplung.

Ein äußerer Kupplungstopf verbindet die Außenlamellen der ersten Reibkupplung drehfest mit der ersten Getriebeeingangswelle, so dass bei zusammengedrücktem Lamellenpaket der ersten Reibkupplung ein Drehmoment zwischen dem angetriebenen Kupplungsgehäuse und der ersten Getriebeeingangswelle übertragen wird. Dabei werden die Außenlamellen drehfest von einem ersten Außenlamellenträger aufgenommen, der einstückig an dem äußeren Kupplungstopf angeformt ist. Die drehfeste Aufnahme der Außenlamellen durch den Außenlamellenträgers erfolgt über axial längs verlaufende Nuten an einer Innenseite des Außenlamellenträgers, in die radial nach außen stehende Vorsprünge der Außenlamellen greifen. Ein Außendurchmesser der Außenlamellen (ohne die Vorsprünge gerechnet) ist dabei etwas kleiner als ein Innendurchmesser des Außenlamellenträgers, sodass sich die Außenlamellen in axialer Richtung relativ zum Außenlamellenträger verschieben beziehungsweise in den äußeren Kupplungstopf hineinschieben lassen.

In ähnlicher Weise wie der äußere Kupplungstopf weist ein innerer Kupplungstopf, der in dem äußeren Kupplungstopf angeordnet ist, ebenfalls am Topfrand einen einstückig angeformten zweiten Außenlamellenträger für die drehfeste Aufnahme der Außenlamellen der zweiten Reibkupplung auf. Auch hier ist ein Innendurchmesser des zweiten Außenlamellenträgers, der einem Innendurchmesser am Topfrand des inneren Kupplungstopfes entspricht, etwas größer als ein Außendurchmesser der betreffenden Außenlamellen, um Letztgenannte in den Kupplungstopf schieben zu können. Über Nuten und Vorsprünge wird wie bei der ersten Reibkupplung zwischen Außenlamellen und Kupplungstopf ein Formschluss in Umfangsrichtung hergestellt.

Wie oben bereits erwähnt, liegt der innere Kupplungstopf in dem äußeren Kupplungstopf. Damit bei der Montage der Doppelkupplung der innere Kupplungstopf in den äußeren Kupplungstopf gelegt beziehungsweise bei der Demontage aus diesem herausgenommen werden kann, ist der Innendurchmesser am Topfrand des äußeren Kupplungstopfes größer als ein Außendurchmesser des inneren Kupplungstopfes. Dies bedingt, dass der Innendurchmesser des äußeren Kupplungstopfs größer ist als der Innendurchmesser des inneren Kupplungstopfs. Um diese Differenz auszugleichen, sind die Außenlamellen des äußeren Kupplungstopfes mit entsprechend größerem Außendurchmesser ausgebildet.

Aufgrund der unterschiedlich großen Außenlamellen verhalten sich die beiden Kupplungen thermisch und mechanisch unterschiedlich. Dies kann zu Einbußen beim Fahrkomfort eines mit dieser Doppelkupplung bestückten Kraftfahrzeugs führen oder erfordert, um keine Einbußen beim Fahrkomfort hinnehmen zu müssen, ein aufwendiges Kupplungsmanagement.

Aus der gattungsbildenden WO 2004/104439 A1 ist eine Doppelkupplung mit einer ersten Reibkupplung und einer axial daneben angeordneten zweiten Reibkupplung bekannt, deren jeweilige Außenlamellenträger zur Aufnahme gleichgroßer Außenlamellen ausgebildet sind. Dies bedeutet, dass in der ersten und zweiten Reibkupplung gleichgroße Außenlamellen zur Anwendung kommen können. Durch die gleichgroßen Außenlamellen und durch gleichgroße Innenlamellen, so wie sie ebenfalls aus dem anderen, oben erwähnten Stand der Technik bekannt sind, zeigen die erste und die zweite Reibkupplung ein vergleichbares thermisches und mechanisches Verhalten. Dieses günstige Verhalten kann somit auch bei Doppelkupplungen mit zwei Kupplungstöpfen genutzt werden, bei denen einer der beiden Kupplungstöpfe in dem anderen Kupplungstopf (äußerer Kupplungstopf) liegt und das Drehmoment der ersten und zweiten Reibkupplung über jeweils eine gleiche axiale Seite zu den Getriebeeingangswellen abgeführt wird. Insbesondere bedeutet die Aufnahme baugleicher Außenlamellen, dass die Innendurchmesser des ersten und zweiten Außenlamellenträgers gleich sind.

Bei der in WO 2004/104439 A1 offenbarten Doppelkupplung wird eine im wesentlichen zylindrische Seitenwand des äußeren Kupplungstopfes durch ein erstes, an einem Boden angrenzendes Seitenwandteil und durch ein zweites, vom Boden entferntes Seitenwandteil gebildet. Das erste Seitenwandteil erstreckt sich vom Boden ausgehend in axialer Richtung der Doppelkupplung und hat eine zylindrische Form. Dem ersten Seitenwandteil schließt sich in axialer Richtung das zweite Seitenwandteil an, wobei das zweite Seitenwandteil einen Außendurchmesser aufweist, der kleiner als ein Außendurchmesser des ersten Seitenwandteiles ist. In Einbaulage umschließt das erste, bodenangrenzende Seitenwandteil eine zylindrische Seitenwand des inneren Kupplungstopfes, während das zweite Seitenwandteil den Außenlamellenträger hält, der die Außenlamellen der ersten Reibkupplung aufnimmt. Somit wird das Drehmoment der ersten Kupplung auf das zweite Seitenwandteil geleitet, und wird über das erste Seitenwandteil und über den Boden des äußeren Kupplungstopfes zur ersten Getriebeeingangswelle geführt. Die Seitenwand und der Boden des äußeren Kupplungstopfes sind jeweils einstückig ausgebildet und sind mit einer Art Steckverbindung miteinander verbunden, durch die das Drehmoment von der Seitenwand auf den Boden geleitet wird. Jedoch ist eine Steckverbindung mit einem erhöhten Montageaufwand verbunden. Auch muss, um eine Unwucht der sich im Betrieb der Doppelkupplung rotierenden Seitenwand zu verhindern, eine genaue Positionierung der zylindrischen Seitenwand in radialer Richtung ebenfalls von der Steckverbindung geleistet werden, so dass diese aufwändig zu gestalten ist.

Der Erfindung liegt daher die Aufgabe zugrunde, eine Doppelkupplung der oben beschriebenen Art bereitzustellen, die einfach und kompakt aufgebaut ist, keine besonderen Anforderungen an das Kupplungsmanagement stellt, einen hohen Fahrkomfort ermöglicht und sich gut herstellen lässt.

Die der Erfindung zu Grunde liegende Aufgabe wird mit den Merkmalskombinationen gemäß Anspruch 1 oder gemäß Anspruch 5 gelöst. Bevorzugte Ausführungsbeispiele können den Unteransprüchen entnommen werden

Gemäß Anspruch 1 sind das erste und das zweite Seitenwandteil des äußeren Kupplungstopfes miteinander verschweißt. Ist bei einstückig ausgeführtem zweiten Seitenwandteil und Außenlamellenträger der Außendurchmesser des inneren Kupplungstopfes größer als der Innendurchmesser am Topfrand des äußeren Kupplungstopfes, muss vor dem Verschweißen der beiden Seitenwandteile der innere Kupplungstopf in den äußeren Kupplungstopf beziehungsweise in das erste Seitenwandteil des äußeren Kupplungstopfes gelegt werden. Nach dem Zusammenfügen, was auch durch andere geeignete Verfahren wie Löten möglich ist, lässt sich der innere Kupplungstopf dann nicht mehr aus dem äußeren Kupplungstopf herausnehmen.

In einem Ausführungsbeispiel sind das zweite Seitenwandteil und der erste Außenlamellenträger einstückig ausgebildet, der erste Außenlamellenträger und das zweite, am Topfrand liegende Seitenwandteil sind ein Bauteil. An einer Innenseite des Seitenwandteils sind dabei die längsverlaufenden Nuten vorgesehen, die die radial nach außen stehenden Vorsprünge der Außenlamellen aufnehmen. Der Innendurchmesser des zweiten Seitenwandteils oder der Innendurchmesser am Topfrand des äußeren Kupplungstopfes entspricht somit dem Innendurchmesser des ersten Außenlamellenträgers. Der Innendurchmesser ist dabei der Durchmesser des Außenlamellenträgers, auf dem die Oberkanten der Nuten des Außenlamellenträgers liegen. Der Innendurchmesser des Außenlamellenträgers ist etwas größer als der Außendurchmesser der Außenlamellen, der die Basis für die nach radial nach außen ragenden Vorsprünge bildet.

Das erste und das zweite Seitenwandteil können an jeweils einem zum anderen Seitenwandteil zugewandten Ende einen radial nach außen gerichteten Abschnitt aufweisen. Die Abschnitte der nebeneinander angeordneten Seitenwandteile liegen dann aneinander an und lassen sich beispielsweise an ihren radial nach außen stehenden Enden durch eine darauf gesetzte Schweißnaht verbinden. Die nach außen gerichteten Abschnitte sorgen für eine Versteifung der Seitenwandteile, so dass diese durch die im Betrieb der Doppelkupplung auftretenden Fliehkräfte weniger ausgeweitet werden.

In einem bevorzugten Ausführungsbeispiel weist das zweite Seitenwandteil ein U-förmiges Ringprofil mit zwei Schenkeln auf, die radial nach außen zeigen. Die beiden Schenkel versteifen das zweite Seitenwandteil, wobei der dem ersten Seitenwandteil zugewandte Schenkel mit dem oben erwähnten Randabschnitt des ersten Seitenwandteiles verschweißt werden kann.

Der erste Außenlamellenträger ist gemäß Anspruch 5 mit dem äußeren Kupplungstopf fest verbunden, nämlich verschweißt. Dabei kann der Außenlamellenträger zumindest an drei am Umfang verteilten Stellen an der Innenseite des äußeren Kupplungstopfes anliegen und dort verschweißt sein.

Eine nicht durch die Erfindung gedeckte Möglichkeit besteht darin, dass der erste Außenlamellenträger mit dem äußeren Kupplungstopf lösbar verbunden ist. Dadurch kann bei Bedarf der innere Kupplungstopf aus dem äußeren Kupplungstopf genommen werden, wenn zuvor der Außenlamellenträger von dem äußeren Kupplungstopf demontiert worden ist.

Vorzugsweise weisen der erste Außenlamellenträger und der zweite Außenlamellenträger an jeweils einer Innenwand axial verlaufende und in Umfangsrichtung beabstandete Nuten auf, in die jeweils radial nach außen gerichtete Vorsprünge der Außenlamellen der ersten beziehungsweise der zweiten Reibkupplung greifen, wobei die Nutform und Anordnung der Nuten des ersten Außenlamellenträgers der Nutform und Anordnung der Nuten des zweiten Außenlamellenträgers entsprechen. Durch die axial verlaufenden Nuten sind die Außenlamellen der ersten und zweiten Reibkupplung in Umfangsrichtung formschlüssig mit dem jeweiligen Außenlamellenträger und somit mit dem entsprechenden Kupplungstopf verbunden. In axialer Richtung hingegen lassen sich die Außenlamellen relativ zu dem äußeren oder inneren Kupplungstopf verschieben, wobei die Vorsprünge einer Außenlamellen entlang der Nuten des Lamellenträgers gleiten. Aufgrund der gleichen Nutform und Anordnung der Nuten ist es möglich, dass die Außenlamellen mit den entsprechenden radial nach außen ragenden Vorsprüngen entlang der Innenseite der Seitenwand des äußeren Kupplungstopfes bis zu dem inneren Kupplungstopf geschoben werden können. Somit ist es trotz baugleicher Außenlamellen möglich, die zweite Reibkupplung beziehungsweise den inneren Kupplungstopf mit Außenlamellen zu bestücken.

In einem bevorzugten Ausführungsbeispiel ist ein Außenring vorgesehen, der den äußeren Kupplungstopf von außen umgreift.

Alternativ zu den obigen Ausführungsbeispielen kann der Außenring auch direkt an dem äußeren Kupplungstopf anliegen und vorzugsweise mit diesem verschweißt sein. Damit wird die Steifigkeit des äußeren Kupplungstopfes in radialer Richtung erhöht. Vorzugsweise befindet sich der Außenring in der Nähe des Topfrandes.

Um in Einbaulage des inneren und äußeren Kupplungstopfes die Außenlamellen in die Nuten des inneren Kupplungstopfes in einfacher Weise schieben zu können, ist vorzugsweise eine Positionierhilfe vorgesehen, die eine exakte Ausrichtung des äußeren Kupplungstopfes zum inneren Kupplungstopfes in Umfangsrichtung ermöglicht. Exakte Ausrichtung heißt hier, dass die beiden Kupplungstöpfe zueinander einen bestimmten Drehwinkel aufweisen. Bei gewissen Drehwinkeln fluchten die Nuten des äußeren Kupplungstopfes mit den Nuten des inneren Kupplungstopfes. Somit müssen die Außenlamellen für den inneren Kupplungstopf nicht, nachdem sie mit ihren Vorsprüngen die Nuten des äußeren Kupplungstopfes durchlaufen haben, um ihre Achse gedreht zu werden, sondern können ohne umständliche Drehung in die Nuten des inneren Kupplungstopfes geschoben werden.

In einem bevorzugten Ausführungsbeispiel weist die Positionierhilfe zwei Bohrungen auf, von denen eine durch den äußeren Kupplungstopf und die andere durch den inneren Kupplungstopf greift und die bei exakter Ausrichtung in Umfangsrichtung zueinander fluchten. Die exakte Ausrichtung kann nun durch einen Stift oder dergleichen fixiert werden, der durch beide Bohrungen greift und ein relatives Verdrehen der beiden Kupplungstöpfe verhindert. Die Bohrungen können am jeweiligen Boden oder an der jeweiligen Seitenwand der Kupplungstöpfe vorgesehen sein.

Anhand der in den Figuren dargestellten Ausführungsbeispielen wird die Erfindung näher erläutert. Es zeigen:
- Figur 1: ein erstes Ausführungsbeispiel der Erfindung im Längsschnitt;
- Figur 2: einen Ausschnitt eines zweiten Ausführungsbeispiels im Längsschnitt;
- Figur 3: einen Ausschnitt eines dritten Ausführungsbeispiels der Erfindung im Längsschnitt;
- Figur 4: einen Ausschnitt eines vierten Ausführungsbeispiels im Querschnitt;

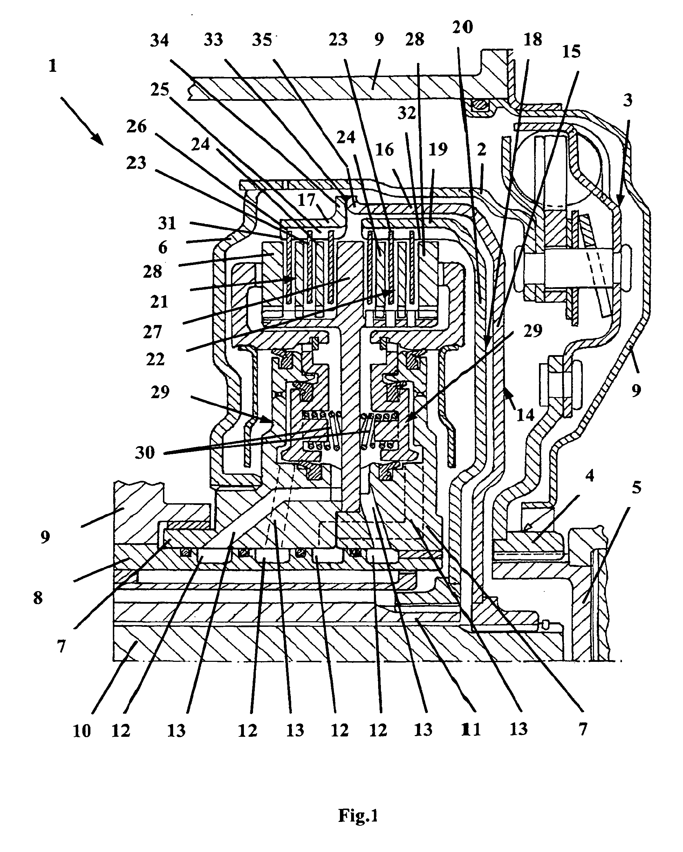

Die in Figur 1 gezeigte und allgemein mit 1 bezeichnete Doppelkupplung weist ein Kupplungsgehäuse 2 auf, das über eine Torsionsdämpfereinheit 3 an einem Kupplungsflansch 4 drehfest mit einer Antriebswelle 5 eines hier nicht dargestellten Motors verbunden ist.

Das Drehmoment des Motors wird über die Antriebswelle 5, den Kupplungsflansch 4 und dem Kupplungsgehäuse 2 auf einen Kupplungsgehäusedeckel 6 übertragen, der drehfest mit einer zweigeteilten Kupplungsnabe 7 verbunden ist. Die Kupplungsnabe 7 ist drehbar um eine feststehende Kupplungsachse 8 gelagert, die fest mit einem Gehäuse 9 eines Getriebes verbunden ist, von dem in der Figur 1 noch eine erste Getriebeeingangswelle 10 und eine zweite Getriebeeingangswelle 11 dargestellt ist. Die zweite Getriebeeingangswelle 11 ist als Hohlwelle ausgebildet, die koaxial zur ersten Getriebeeingangswelle 10 angeordnet ist.

Neben der Drehlagerung der Kupplungsnabe 7 kommt der feststehenden Kupplungsachse 8 die Aufgabe zu, Öl, das aus dem Getriebe zugeführt wird, in der Doppelkupplung 1 zu verteilen. Dazu sind in der Kupplungsachse 8 mehrere ringförmige Ölkanäle 12 ausgebildet, von denen das Öl in ein System von Ölbohrungen 13 strömt.

Die erste Getriebeeingangswelle 10 ist drehfest mit einem äußeren Kupplungstopf 14 verbunden. Der Kupplungstopf 14 weist einen runden Boden 15 auf, der sich in radialer Richtung der Doppelkupplung 1 erstreckt. Der runde Boden 15 geht in ein erstes Seitenwandteil 16 über, das sich in axialer Richtung senkrecht zum Boden 15 erstreckt. Dem ersten Seitenwandteil 16 schließt sich in axialer Richtung ein zweites Seitenwandteil 17 an. Das erste und das zweite Seitenwandteil 16, 17 bilden die Seitenwand des äußeren Kupplungstopfes 14

Die zweite Getriebeeingangswelle 11 ist drehfest mit einem inneren Kupplungstopf 18 verbunden, der in dem äußeren Kupplungstopf 14 koaxial angeordnet liegt. Eine ringförmige Seitenwand 19 des inneren Kupplungstopfes 18 wird von dem ersten Seitenwandteil 16 des äußeren Kupplungstopfes 14 umschlossen. Ein runder Boden 20 des inneren Kupplungstopfes 18 erstreckt sich parallel zum Boden 15 des äußeren Kupplungstopfes 14 in radialer Richtung. Die jeweiligen Seitenwände der Kupplungstöpfe 14, 18 erstrecken sich damit von den jeweiligen Böden in gleicher axialer Richtung. Der innere Kupplungstopf 18 ist einstückig ausgebildet, während der äußere Kupplungstopf aus zwei Stücken besteht, nämlich aus dem Boden mit dem daran angeformten ersten Seitenwandteil 16 einerseits und dem zweiten Seitenwandteil 17 anderseits.

Der Drehmomentübertragung zwischen den Getriebeeingangswellen 10, 11 und dem angetriebenen Kupplungsgehäuse 2 erfolgt über eine erste Reibkupplung 21 beziehungsweise über eine zweite Reibkupplung 22. Die erste Reibkupplung 21 umfasst mehrere Außenlamellen 23 und mehrere Innenlamellen 24. Die Außenlamellen 23 sind mittels mehrerer Nuten 25 in dem zweiten Seitenwandteil 17 und in die Nuten 25 greifender Vorsprünge 26 an den Außenlamellen 23 drehfest mit dem äußeren Kupplungstopf 14 verbunden. In diesem Ausführungsbeispiel stellt somit das zweite Seitenwandteil einen ersten Außenlamellenträger für die drehfeste Aufnahme der Außenlamellen 23 der ersten Reibkupplung 21 dar.

Die Innenlamellen 24 werden von einem Kupplungssteg 27 gehalten, wobei der Kupplungssteg 27 eine drehfeste Verbindung zwischen den Innenlamellen 24 und der Kupplungsnabe 8 und damit der Antriebswelle 5 herstellt. Werden die Außenlamellen 23 und die Innenlamellen 24 über eine axial verschiebbare Druckplatte 27 zusammengedrückt, wird durch die Reibung zwischen Innenlamellen 24 und Außenlamellen 23 ein Drehmoment übertragen. Somit entsteht eine Kraftfluss zwischen der Antriebswelle 5 und der ersten Getriebeeingangswelle. Die Druckplatte 28 wird durch eine Zylinder-Kolbeneinheit 29 betätigt. Eine Feder 30 drückt die Druckplatte 28 wieder in ihre Ausgangslage, wenn die Zylinder-Kolbeneinheit 29 nicht mit einem entsprechenden Öldruck beaufschlagt ist.

Die zweite Reibkupplung 22 weist ebenfalls mit 23 bezeichnete Außenlamellen und mit 24 bezeichnete Innenlamellen 24 auf, die, wenn sie zusammengedrückt werden, einen Kraftfluss zwischen der Antriebswelle 5 und der zweiten Getriebeeingangswelle 11 herstellen. Die Außenlamellen 23 der zweiten Reibkupplung 22 sind baugleich zu den Außenlamellen 23 der ersten Reibkupplung 21. Gleiches gilt für die Innenlamellen 24. Die Druckbeaufschlagung zur Betätigung der zweiten Reibkupplung 22 ähnelt der Druckbeaufschlagung der ersten Reibkupplung 21. Dazu werden auch gleiche/gleichartige Bauteile verwendet, so dass eine gewisse Symmetrie im Aufbau der Doppelkupplung 1 bezogen auf den Kupplungssteg 27 zu erkennen ist. In der Figur 1 erhalten gleiche/gleichartige Bauteile daher gleiche Bezugszeichen. Die Seitenwand 19 des inneren Kupplungstopfes 18 ist als ein zweiter Außenlamellenträger ausgebildet, durch den die Außenlamellen 23 der zweiten Reibkupplung 22 drehfest aufgenommen werden.

Das zweite Seitenwandteil 17 weist einen Innendurchmesser 31 auf, der einem Innendurchmesser 32 der Seitenwand 19 des inneren Kupplungstopfes 18 entspricht. Daher kann der innere Kupplungstopf 18 nicht aus dem äußeren Kupplungstopf 14 herausgenommen werden, da das zweite Seitenwandteil 17 über eine Schweißnaht 33 mit dem ersten Seitenwandteil 16 des äußeren Kupplungstopfes fest verbunden ist. Das zweite Seitenwandteil 17 weist an einem dem ersten Seitenwandteil 16 zugewandten Ende einen radial nach außen gerichteten Abschnitt 34 auf, der parallel an einem ebenfalls radial nach außen gerichteten Abschnitt 35 des ersten Seitenwandteiles anliegt. Die beiden Abschnitte 34, 35 bilden eine gemeinsame, umlaufende Fläche, auf die die Schweißnaht 33 gesetzt ist.

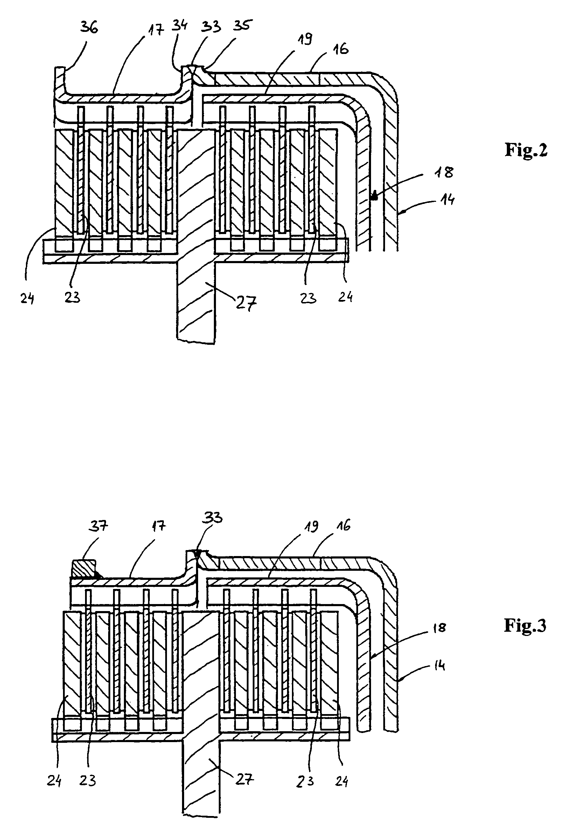

Die Figur 2 zeigt ein zweites Ausführungsbeispiel, wobei hier nur im Ausschnitt die Außenlamellen 23 und Innenlamellen 24 der ersten und zweiten Reibkupplung 21, 22, der innere und äußere Kupplungstopf 14, 18 sowie der Kupplungssteg 27 dargestellt sind. Gegenüber dem Ausführungsbeispiel der Figur 1 ist das zweite Seitenwandteil 17 modifiziert. Zur Verstärkung/Versteifung des äußeren Kupplungstopfes 14 ist direkt am Topfrand ein radial nach außen gerichteter Abschnitt 36 vorgesehen, so dass das Seitenwandteil 17 im Ringprofil U-förmig ist und die Abschnitte 35, 36 als U-Schenkel aufgefasst werden können.

Alternativ oder auch zusätzlich zur Verstärkung des äußeren Kupplungstopfes kann ein Außenring 37 vorgesehen sein, der, wie in Figur 3 zu sehen, außen an dem zweiten Seitenwandteil 17 anliegt und mit diesem verschweißt ist. Dies gibt dem äußeren Kupplungstopf 14 eine Steifheit, so dass auch bei hohen Drehzahlen die Außenlamellen 23 in exakter radialer Position gehalten werden.

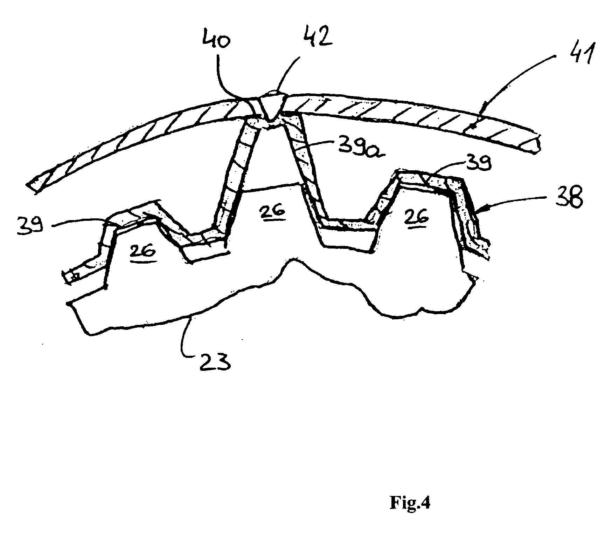

Figur 4 zeigt ein weiteres Ausführungsbeispiel, bei dem der erste Außenlamellenträger separat, also nicht einstückig mit der Seitenwand oder mit dem Seitenwandteil 17 des äußeren Kupplungstopfes 14 ausgebildet ist. Der separat ausgeführte Außenlamellenträger wird mit 38 bezeichnet und weist eine Vielzahl parallel verlaufender Nuten 39 auf, in die die radial nach außen stehenden Vorsprünge 26 der Außenlamelle 23 greifen. Wenigstens drei am Umfang verteilte Nuten 39a (in der Figur 4 ist nur eine Nut 39a dargestellt) aus der Vielzahl der Nuten 39 weisen eine vergrößerte Nuttiefe auf, so dass jeweils ein Nutboden 40 an einem äußeren Kupplungstopf 41 anliegt und mittels einer Schweißnaht 42 mit diesem verbunden ist.

### Doppelkupplung mit gleichgroßen Lamellen

### Bezugszeichenliste

- 1: Doppelkupplung
- 2: Kupplungsgehäuse
- 3: Torsionsdämpfereinheit
- 4: Kupplungsflansch
- 5: Antriebswelle
- 6: Kupplungsgehäusedeckel
- 7: Kupplungsnabe
- 8: Kupplungsachse
- 9: Getriebegehäuse
- 10: Erste Getriebeeingangswelle
- 11: Zweite Getriebeeingangswelle
- 12: Ölkanal
- 13: Ölbohrung
- 14: Äußerer Kupplungstopf
- 15: Boden
- 16: Seitenwandteil
- 17: Seitenwandteil
- 18: Innerer Kupplungstopf
- 19: Seitenwand
- 20: Boden
- 21: Erste Reibkupplung
- 22: Zweite Reibkupplung
- 23: Außenlamelle
- 24: Innenlamelle
- 25: Nut
- 26: Vorsprung
- 27: Kupplungssteg
- 28: Druckplatte

- 29: Zylinder-Kolbeneinheit
- 30: Feder
- 31: Innendurchmesser
- 32: Innendurchmesser
- 33: Schweißnaht
- 34: Abschnitt
- 35: Abschnitt
- 36: Abschnitt
- 37: Außenring
- 38: Außenlamellenträger
- 39: Nut (39a)
- 40: Nutboden
- 41: Äußerer Kupplungstopf
- 42: Schweißnaht

## Patentansprüche

1. Doppelkupplung (1) für ein Getriebe mit einer ersten Getriebeeingangswelle (10) und einer dazu koaxial angeordneten zweiten Getriebeeingangswelle (11), umfassend
- eine erste Reibkupplung (21) und zweite Reibkupplung (22), die in axialer Richtung nebeneinander angeordnet sind und jeweils ein Lamellenpaket mit Außenlamellen (23) und Innenlamellen (24) aufweisen,
- ein antreibbares Bauteil (2), das drehfest mit den Innenlamellen (24) der ersten und zweiten Reibkupplung (21, 22) verbunden ist;
- einen ersten Außenlamellenträger (17; 38) für die drehfeste Aufnahme der Außenlamellen der ersten Reibkupplung (21) und einen zweiten Außenlamellenträger (19) für die drehfeste Aufnahme der Außenlamellen (23) der zweiten Reibkupplung (22), wobei der erste Außenlamellenträger (17; 38) und der zweite Außenlamellenträger (19) zur Aufnahme baugleicher Außenlamellen (23) ausgebildet sind;
- einen äußeren Kupplungstopf (14; 41), der den ersten Außenlamellenträger (17; 38) drehfest mit der ersten Getriebeeingangswelle (10) verbindet, und einen in dem äußeren Kupplungstopf (14) liegenden, inneren Kupplungstopf (18), der den zweiten Außenlamellenträger (19) drehfest mit der zweiten Getriebeeingangswelle (11) verbindet, wobei eine Seitenwand des äußeren Kupplungstopfes (14) ein erstes Seitenwandteil (16), das an einem Boden des äußeren Kupplungstopfes (14) angrenzt, und ein zweites Seitenwandteil (17) aufweist, das sich dem ersten Seitenwandteil (16) in axialer Richtung anschließt, wobei das zweite Seitenwandteil (17) einen Außendurchmesser aufweist, der kleiner als ein Außendurchmesser des ersten Seitenwandteiles (16) ist
**dadurch gekennzeichnet, dass** das erste und das zweite Seitenwandteil (16, 17) des äußeren Kupplungstopfes (14) miteinander verschweißt sind.

2. Doppelkupplung (1) nach Anspruch 1, **dadurch gekennzeichnet, dass** das zweite Seitenwandteil (17) und der erste Außenlamellenträger (17) einstückig ausgebildet sind.

3. Doppelkupplung (1) nach Anspruch 1 oder 2, **dadurch gekennzeichnet, dass** das erste Seitenwandteil (16) und das zweite Seitenwandteil (17) jeweils an einem zum anderen Seitenwandteil zugewandten Ende einen radial nach außen gerichteten Abschnitt (34, 35) aufweisen.

4. Doppelkupplung (1) nach einem der Ansprüche 1 bis 3, **dadurch gekennzeichnet, dass** das zweite Seitenwandteil (17) ein U-förmiges Ringprofil mit zwei Schenkeln aufweist, die radial nach außen gerichtet sind.

5. Doppelkupplung (1) für ein Getriebe mit einer ersten Getriebeeingangswelle (10) und einer dazu koaxial angeordneten zweiten Getriebeeingangswelle (11), umfassend
- eine erste Reibkupplung (21) und zweite Reibkupplung (22), die in axialer Richtung nebeneinander angeordnet sind und jeweils ein Lamellenpaket mit Außenlamellen (23) und Innenlamellen (24) aufweisen,
- ein antreibbares Bauteil (2), das drehfest mit den Innenlamellen (24) der ersten und zweiten Reibkupplung (21, 22) verbunden ist;
- einen ersten Außenlamellenträger (17; 38) für die drehfeste Aufnahme der Außenlamellen der ersten Reibkupplung (21) und einen zweiten Außenlamellenträger (19) für die drehfeste Aufnahme der Außenlamellen (23) der zweiten Reibkupplung (22), wobei der erste Außenlamellenträger (17; 38) und der zweite Außenlamellenträger (19) zur Aufnahme baugleicher Außenlamellen (23) ausgebildet sind;
- einen äußeren Kupplungstopf (14; 41), der den ersten Außenlamellenträger (17; 38) drehfest mit der ersten Getriebeeingangswelle (10) verbindet, und einen in dem äußeren Kupplungstopf (14) liegenden, inneren Kupplungstopf (18), der den zweiten Außenlamellenträger (19) drehfest mit der zweiten Getriebeeingangswelle (11) verbindet,
**dadurch gekennzeichnet, dass** der erste Außenlamellenträger (38) mit dem äußeren Kupplungstopfes (41) verschweißt ist.

6. Doppelkupplung (1) nach einem der Ansprüche 1 bis 5, **dadurch gekennzeichnet, dass** der erste Außenlamellenträger (17; 38) und der zweite Außenlamellenträger (19) jeweils an einer Innenseite axial verlaufende und in Umfangsrichtung beabstandete Nuten (25; 39, 39a) aufweisen, in die jeweils radial nach außen gerichtete Vorsprünge (26) der Außenlamellen (23) der ersten beziehungsweise zweiten Reibkupplung (21, 22) greifen, wobei die Nutform und Anordnung der Nuten des ersten Außenlamellenträges der Nutform und Anordnung der Nuten des zweiten Außenlamellenträgers entsprechen.

7. Doppelkupplung (1) nach einem der Ansprüche 1 bis 6, **dadurch gekennzeichnet, dass** ein Außenring (37) den äußeren Kupplungstopf (14) von außen umgreift.

8. Doppelkupplung (1) nach Anspruch 7, **dadurch gekennzeichnet, dass** der Außenring (37) außen an dem äußeren Kupplungstopf (14) anliegt und vorzugsweise mit diesem verschweißt ist.

9. Doppelkupplung (1) nach einem der Ansprüche 1 bis 8, **dadurch gekennzeichnet, dass** eine Positionierhilfe vorgesehen ist, die eine exakte Festlegung eines Drehwinkels zwischen dem äußeren Kupplungstopf (14; 41) und dem inneren Kupplungstopf (18) ermöglicht.

10. Doppelkupplung (1) nach Anspruch 9, **dadurch gekennzeichnet, dass** die Positionierhilfe zwei Bohrungen aufweist, von denen eine durch den äußeren Kupplungstopf (14) und die andere durch den inneren Kupplungstopf (18) greift und die bei einem bestimmten Drehwinkel zwischen den Kupplungstöpfen (14, 18) zueinander fluchten.

## Claims

1. Dual clutch (1) for a transmission having a first transmission input shaft (10) and, arranged coaxially with respect thereto, a second transmission input shaft (11), comprising
- a first friction clutch (21) and a second friction clutch (22) which are arranged adjacent to one another in the axial direction and which have in each case one disc pack with outer discs (23) and inner discs (24),
- a drivable component (2) which is rotationally fixedly connected to the inner discs (24) of the first and second friction clutches (21, 22);
- a first outer disc carrier (17; 38) for rotationally fixedly holding the outer discs of the first friction clutch (21) and a second outer disc carrier (19) for rotationally fixedly holding the outer discs (23) of the second friction clutch (22), with the first outer disc carrier (17; 38) and the second outer disc carrier (19) being designed to hold outer discs (23) of identical design;
- an outer clutch pot (14; 41), which rotationally fixedly connects the first outer disc carrier (17; 38) to the first transmission input shaft (10), and an inner clutch pot (18) which is situated in the outer clutch pot (14) and which rotationally fixedly connects the second outer disc carrier (19) to the second transmission input shaft (11), with a side wall of the outer clutch pot (14) having a first side wall part (16), which adjoins a base of the outer clutch pot (14), and a second side wall part (17), which adjoins the first side wall part (16) in the axial direction, with the second side wall part (17) having an outer diameter which is smaller than an outer diameter of the first side wall part (16),
**characterized in that** the first and the second side wall parts (16, 17) of the outer clutch pot (14) are welded to one another.

2. Dual clutch (1) according to Claim 1,
**characterized in that** the second side wall part (17) and the first outer disc carrier (17) are formed in one piece.

3. Dual clutch (1) according to Claim 1 or 2,
**characterized in that** the first side wall part (16) and the second side wall part (17) have, in each case at an end pointing towards the other side wall part, a radially outwardly aligned section (34, 35).

4. Dual clutch (1) according to one of Claims 1 to 3,
**characterized in that** the second side wall part (17) has a U-shaped annular profile with two limbs which are aligned radially outwards.

5. Dual clutch (1) for a transmission having a first transmission input shaft (10) and, arranged coaxially with respect thereto, a second transmission input shaft (11), comprising
- a first friction clutch (21) and a second friction clutch (22) which are arranged adjacent to one another in the axial direction and which have in each case one disc pack with outer discs (23) and inner discs (24),
- a drivable component (2) which is rotationally fixedly connected to the inner discs (24) of the first and second friction clutches (21, 22);
- a first outer disc carrier (17; 38) for rotationally fixedly holding the outer discs of the first friction clutch (21) and a second outer disc carrier (19) for rotationally fixedly holding the outer discs (23) of the second friction clutch (22), with the first outer disc carrier (17; 38) and the second outer disc carrier (19) being designed to hold outer discs (23) of identical design;
- an outer clutch pot (14; 41), which rotationally fixedly connects the first outer disc carrier (17; 38) to the first transmission input shaft (10), and an inner clutch pot (18) which is situated in the outer clutch pot (14) and which rotationally fixedly connects the second outer disc carrier (19) to the second transmission input shaft (11),
**characterized in that** the first outer disc carrier (38) is welded to the outer clutch pot (41).

6. Dual clutch (1) according to one of Claims 1 to 5,
**characterized in that** the first outer disc carrier (17; 38) and the second outer disc carrier (19) have grooves (25; 39, 39a) which run axially in each case on an inner side and which are spaced apart in the circumferential direction and into which engage in each case radially outwardly aligned projections (26) of the outer discs (23) of the first and second friction clutches (21, 22) respectively, with the groove shape and arrangement of the grooves of the first outer disc carrier corresponding to the groove shape and arrangement of the grooves of the second outer disc carrier.

7. Dual clutch (1) according to one of Claims 1 to 6,
**characterized in that** an outer ring (37) engages around the outer clutch pot (14) from the outside.

8. Dual clutch (1) according to Claim 7,
**characterized in that** the outer ring (37) bears at the outside against the outer clutch pot (14) and is preferably welded to the latter.

9. Dual clutch (1) according to one of Claims 1 to 8,
**characterized in that** a positioning aid is provided which makes it possible to precisely set a rotational angle between the outer clutch pot (14; 41) and the inner clutch pot (18).

10. Dual clutch (1) according to Claim 9,
**characterized in that** the positioning aid has two bores, one of which bores extends through the outer clutch pot (14) and the other of which bores extends through the inner clutch pot (18), and which bores are aligned with one another at a certain rotational angle between the clutch pots (14, 18).

## Revendications

1. Double embrayage (1) pour une boîte de vitesses ayant un premier arbre d'entrée de boîte de vitesses (10) et un deuxième arbre d'entrée de boîte de vitesses (11) disposé coaxialement à celui-ci, comprenant :
- un premier embrayage à friction (21) et un deuxième embrayage à friction (22), qui sont disposés l'un à côté de l'autre dans la direction axiale et qui présentent à chaque fois un paquet de disques avec des disques extérieurs (23) et des disques intérieurs (24),
- un composant (2) pouvant être entraîné, qui est connecté de manière solidaire en rotation aux disques intérieurs (24) du premier et du deuxième embrayage à friction (21, 22) ;
- un premier support de disques extérieurs (17 ; 38) pour recevoir de manière solidaire en rotation les disques extérieurs du premier embrayage à friction (21) et un deuxième support de disques extérieurs (19) pour recevoir de manière solidaire en rotation les disques extérieurs (23) du deuxième embrayage à friction (22), le premier support de disques extérieurs (17 ; 38) et le deuxième support de disques extérieurs (19) étant réalisés pour recevoir des disques extérieurs (23) de même construction ;
- un pot d'embrayage extérieur (14 ; 41), qui relie le premier support de disques extérieurs (17 ; 38) de manière solidaire en rotation au premier arbre d'entrée de boîte de vitesses (10), et un pot d'embrayage intérieur (18) situé dans le pot d'embrayage extérieur (14), qui relie le deuxième support de disques extérieurs (19) de manière solidaire en rotation au deuxième arbre d'entrée de boîte de vitesses (11), une paroi latérale du pot d'embrayage extérieur (14) présentant une première partie de paroi latérale (16) qui est adjacente à un fond du pot d'embrayage extérieur (14), et une deuxième partie de paroi latérale (17) qui se raccorde à la première partie de paroi latérale (16) dans la direction axiale, la deuxième partie de paroi latérale (17) présentant un diamètre extérieur qui est inférieur à un diamètre extérieur de la première partie de paroi latérale (16),
**caractérisé en ce que** la première et la deuxième partie de paroi latérale (16, 17) du pot d'embrayage extérieur (14) sont soudées l'une à l'autre.

2. Double embrayage (1) selon la revendication 1,
**caractérisé en ce que** la deuxième partie de paroi latérale (17) et le premier support de disques extérieurs (17) sont réalisés d'une seule pièce.

3. Double embrayage (1) selon la revendication 1 ou 2, **caractérisé en ce que** la première partie de paroi latérale (16) et la deuxième partie de paroi latérale (17) présentent à chaque fois, à une extrémité tournée vers l'autre partie de paroi latérale, une portion (34, 35) orientée radialement vers l'extérieur.

4. Double embrayage (1) selon l'une quelconque des revendications 1 à 3, **caractérisé en ce que** la deuxième partie de paroi latérale (17) présente un profilé annulaire en forme de U avec deux branches qui sont orientées radialement vers l'extérieur.

5. Double embrayage (1) pour une boîte de vitesses ayant un premier arbre d'entrée de boîte de vitesses (10) et un deuxième arbre d'entrée de boîte de vitesses (11) disposé coaxialement à celui-ci, comprenant :
- un premier embrayage à friction (21) et un deuxième embrayage à friction (22), qui sont disposés l'un à côté de l'autre dans la direction axiale et qui présentent à chaque fois un paquet de disques avec des disques extérieurs (23) et des disques intérieurs (24),
- un composant (2) pouvant être entraîné, qui est connecté de manière solidaire en rotation aux disques intérieurs (24) du premier et du deuxième embrayage à friction (21, 22) ;
- un premier support de disques extérieurs (17 ; 38) pour recevoir de manière solidaire en rotation les disques extérieurs du premier embrayage à friction (21) et un deuxième support de disques extérieurs (19) pour recevoir de manière solidaire en rotation les disques extérieurs (23) du deuxième embrayage à friction (22), le premier support de disques extérieurs (17 ; 38) et le deuxième support de disques extérieurs (19) étant réalisés pour recevoir des disques extérieurs (23) de même construction ;
- un pot d'embrayage extérieur (14 ; 41), qui relie le premier support de disques extérieurs (17 ; 38) de manière solidaire en rotation au premier arbre d'entrée de boîte de vitesses (10), et un pot d'embrayage intérieur (18) situé dans le pot d'embrayage extérieur (14), qui relie le deuxième support de disques extérieurs (19) de manière solidaire en rotation au deuxième arbre d'entrée de boîte de vitesses (11),
**caractérisé en ce que** le premier support de disques extérieurs (38) est soudé au pot d'embrayage extérieur (41).

6. Double embrayage (1) selon l'une quelconque des revendications 1 à 5, **caractérisé en ce que** le premier support de disques extérieurs (17 ; 38) et le deuxième support de disques extérieurs (19) présentent chacun des rainures (25 ; 39, 39a) espacées dans la direction périphérique et s'étendant axialement sur un côté intérieur, dans lesquelles s'engagent à chaque fois des saillies (26) des disques extérieurs (23) du premier, respectivement du deuxième embrayage à friction (21, 22), qui sont orientées radialement vers l'extérieur, la forme des rainures et l'agencement des rainures du premier support de disques extérieurs correspondant à la force des rainures et l'agencement des rainures du deuxième support de disques extérieurs.

7. Double embrayage (1) selon l'une quelconque des revendications 1 à 6, **caractérisé en ce qu'**une bague extérieure (37) vient en prise par l'extérieur autour du pot d'embrayage extérieur (14).

8. Double embrayage (1) selon la revendication 7,
**caractérisé en ce que** la bague extérieure (37) s'applique à l'extérieur contre le pot d'embrayage extérieur (14) et est de préférence soudée à celui-ci.

9. Double embrayage (1) selon l'une quelconque des revendications 1 à 8, **caractérisé en ce que** l'on prévoit un auxiliaire de positionnement qui permet une fixation exacte d'un angle de rotation entre le pot d'embrayage extérieur (14 ; 41) et le pot d'embrayage intérieur (18).

10. Double embrayage (1) selon la revendication 9, **caractérisé en ce que** l'auxiliaire de positionnement présente deux alésages dont l'un vient en prise à travers le pot d'embrayage extérieur (14) et l'autre à travers le pot d'embrayage intérieur (18) et qui sont alignés l'un avec l'autre pour un angle de rotation déterminé entre les pots d'embrayage (14, 18).
